Europäisches Patentamt

European Patent Office

Office européen des brevets

(11) Publication number:

**0 387 011**
**A2**

## EUROPEAN PATENT APPLICATION

(21) Application number: 90302392.7

(51) Int. Cl.5: **H05K 7/18**

(22) Date of filing: 05.03.90

(30) Priority: 06.03.89 US 319589

(43) Date of publication of application:
12.09.90 Bulletin 90/37

(84) Designated Contracting States:
AT BE CH DE ES FR GB GR IT LI LU NL SE

(71) Applicant: **AGILIS CORPORATION**
**1390 Shorebird Way**
**Mountain View California 94043-1349(US)**

(72) Inventor: **Gravelle, Larry D.**
**1309 Nilda Avenue**
**Mountain View, California(US)**
Inventor: **Silva, Dennis E.**
**1777 Cape Jasmine Place**
**San Jose, California(US)**
Inventor: **Paulsen, David C.**
**15245 Sycamore Avenue**
**San Martin, California(US)**

(74) Representative: **Jones, Ian et al**
**POLLAK MERCER & TENCH High Holborn**
**House 52-54 High Holborn**
**London WC1V 6RY(GB)**

(54) Modular computer and interface system.

(57) Rectangular casing blocks or slices including various functional electronic modules, typically a power slice, a data storage slice, a demountable portable keyboard slice, a demountable communication slice and a demountable visual display slice, are assembled and latched in top-to-bottom attachment or in front-to-back attachment so that a stack of four or mroe slices is formed and the slices are easily removed for off-site use. Each slice has an internal mounting frame to which is attached plastic edge connection strips having interconnection grooves and tongues at opposed ends. The tongues and grooves are slid together and a latch bail provided for latching together strips abutting in a front-to-back attachment. When strips and the frames of the slices to which the strips are to be attached bottom-to-top another series of interfitting tongues and grooves on the ends of the respective strips are slid into aligned abutment and a latch plate pivoted inwardly to lock the strips and slices together. The latch plate also covers and prevents inadvertent disassembly of the bail.

*FIG._1.*

## MODULAR COMPUTER AND INTERFACE SYSTEM

This invention relates to a system for mating a series of electronic units or assemblies to form a stack of the units. The invention thus provides for the customization of computer and computer peripherals into various assemblages of standard units or components, which assemblages are demountable in whole or in part to form various user configurations.

This application is relted to U.S. Application No. 319,595 filed 06 March 1989 concurrently herewith on an invention of Messrs. Gallatin, Calvert, Silva and Gravelle entitled "Network Topology" and assigned to the present applicant. The disclosure of this related application is incorporated herein by reference.

Data processing systems ordinarily consist of a combination of software programs and physical equipment designed to handle business, scientific, educational or other data at high speeds with self-checking accuracy. Physical equipment has normally included various separate units for inputting data, data storage, central processing and output/printing devices. Communication devices may also be added. In early systems these devices were called cable interconnected, normally with cables extending from the rear of each unit to other units, nd in the case of large systems extending through under-floor ducts. Computers have been more and more miniaturized so that input devices such as keyboards and microchip processors have been combined in one cabient with a display or connectable to an adjacent separate display. Extra storage "slots" in the cabinet have been provided to allow additional floppy or hard-disk storage or separate hard disk storage or tape cassette units provided which are cabled to the computer. With the advent of the portable computer many of these functional units, i.e., keyboard, CPU and other chips, memory units, system boards, visual display, power supply, hard or floppy disk and extra data storage, option slots or bus connectors and cooling devices are all incorporated in a single desk-mounted cabinet generally with an adjacent separate printer. Communication modems or other communication devices to transfer data from one system to another may also be provided. For many applications there is an overage of components in the cabinet and for other applications additional functions such as graphic displays, touch screen, customized function keys, interface to an external wireless keypad, additional mass storage, access to land mobile and cellular and local area networks, special power converters for automotive (12 V), military (28 V) or worldwide AC, and accessories including adapters are needed, particularly if systems are to be hand-carried or specially mounted to vehicles or structures.

An example of a prior art personal computer is the Apple© Macintosh® computer which includes a main computer unit including the CPU, display screen and a disk drive. A separate keyboard is connected by coiled cable to the main unit as is a separate cursor-control mouse. An extra disk drive, modem, printer and numeric key pad can be purchased as separate units which are cable connected to the main unit.

The present invention involves a system which might be termed a "build-your-own-computer and peripheral-system." The invention is not directed to the electronics or electrical or mechanical design of the functional aspects of computing but rather to the packaging of the computer components and computer peripherals into rectangular slices or block-like casings of groups of sizes which can by exterior interconnection be assembled into rectangular stacks of such casings. A computer system can be tailored for a particular application by choosing and assembling desired functional assemblies in the form of groups of standard components. Each casing exterior includes edge tongue and groove interconnect structure which allows one casing to be abuttingly slid into mechanical connection with another casing to build up a stack of functional units each in its own casing. The casings are latched so as to prevent accidental disassembly and provide for easy unlatching to permit carrying away of certain casings containing only those functions to be performed away from the remainder of the stack. A user such as a police patrolman, security guard, chemical process operator or the like need only carry, for example, a lightweight keyboard and display, and communicate to the central processing unit casing, data storage casing and other casings at a central station or in a patrol vehicle by wireless communication. Upon return to the central station or patrol car the keyboard and display modules in their own casings can be again slid into the other casings with the CPU and other functional casings and relatched.

A modular device having a very compact form factor results. The device can be built-up or built-down in the number of modules depending on the complexity or capacities of the system needed. Interface casings such as a touch screen for cursor positioning, data acquisition modules for land or sea mobile or cellular radios and fiber optic media may be provided in one or more casings which can quickly be assembled on or disassembled from an interconnected stack of block casings. The invention permits add-ons in the form of new block casings of various sizes, particularly full or half-length and full and half-thick block casings which may represent upgrades to the latest processor, video and storage, one slice or one block casing at a time. Since the component block casings can be made in various rectangular sizes, high resolution graphics in a 15.24 x 20.32 cm. (6" x 8") or greater size screen is contemplated. Each block casing or slice is modular and environmentally rugged and can be used indoors or out. Standard hardware and software interfaces are supplied in appropriate block casings so that the modularized system is PC compatible, and can be used with Ethernet®, EGA, DOS, UNIX®, OS2 and other operating systems.

In a preferred embodiment each casing is constructed utilizing a rectangular block frame generally of aluminum channel material. Molded plastic edge connection strips extend from opposite sides of the frame, the strips containing a series of interfitting tabs and apertures and end grooves and tongues. When the edges of the frames of two block casings are slidably fitted together the tabs slide into the apertures and the tongues slide into the grooves until the edges of the two frames abut. A latch is then pivoted to normally lock the block casings together either front-to-back or top-to-bottom or both. Each strip may also mount one or more socket-containing small printed circuit boards parallel to the plane of abutment of juxtaposed block casings such that upon sliding assembly of the casings, appropriate electrical contact is made between the internal functional components of the block casings through pin-to-socket electrical connections extending between the circuit boards and within strip recesses. In another embodiment a in-block containing electrical contacts is pluggable into edges of abutting block casings so as to bridge across two casings and electrically connect the electrical internal components of each casing.

For top-to-bottom assembly of one casing to another, pairs of spaced parallel grooves and tongues are provided on the strips accessed from an underside of one block casing, such as a casing having the display, power controls and function keys, and a second casing containing, for example, the CPU and memory device, is provided with strips having a complementary pair of spaced tongues and grooves accessed from the top side of that second casing which sets of tongues and grooves are slidingly interfitted. The first casing then extends abuttingly over the second casing and is latchable thereto using part of the same latch as used to latch casings front-to-back. Stop tabs may be provided on the strip surfaces to prevent oversliding of the respective casings. Complementary slots and tabs in the strips guide the strips front-to-back into aligned abutment.

The invention is further described below, by way of example, with reference to the accompanying drawings, in which:

Fig. 1 is an isometric view of the modular computer of the invention showing a console slice being mounted/demounted on an interconnected keyboard slice, data storage slice and power slice.

Fig. 2 is a schematic side view showing the first step in mounting of one slice bottom-to-top on an interconnected top-to-bottom stack of two other slices.

Fig. 3 is a schematic side view showing the second step in mounting the Fig. 2 assemblage.

Fig. 4 is a schematic side view showing the first step in mounting of one slice front-to-back to another slice of a stack of other slices.

Fig. 5 is a partial schematic side view showing the second step in mounting the Fig. 4 assemblage.

Fig. 6 is a schematic side view of the first step in assembling an electrical connection U-block to a stacked assembly of slices.

Fig. 7 schematically illustrates the second step in interfitting the U-block connection into the stack.

Fig. 8 is an isometric partial view of a processor slice showing attachment of a mass storage slice.

Fig. 9 is an isometric view of a mobile communications or other module slice.

Fig. 10 is an isometric partial view of two slices showing their internal frames and attached edge connection strips of the invention prior to front-to-back assembly.

Fig. 11 is an isometric partial view showing the tongues and grooves construction allowing sliding of one edge connection strip into another edge connection strip front-to-back.

Fig. 12 is an isometric partial view showing the sliding of one edge connection strip in another edge connection strip top-to-bottom and illustrating the pivoting of a bail to lock slices front-to-back and a pivotable latch cover to lock two edge connection strips and their attached slices top-to-bottom.

Fig. 13 is a side partial view of the left end of an edge connection strip reversed 180°.

Fig. 14 is a side partial view of the right end of the edge connection strip of Fig. 13.

Fig. 15 is a top partial view of the left end of the lower strip of Fig. 10.

Fig. 16 is a top partial view of the right end of the strip of Fig. 14.

Fig. 17 is a cross-sectional view of the U-block electrical connection of Fig. 6.

Fig. 18 is a plan view of the plate or cover of the latch of Fig. 12.

Fig. 19 is a side view thereof.

Fig. 20 is an end view thereof.

Fig. 21 is a plan view of a keyboard latch.

Fig. 22 is an end view of the latch of Fig. 21.

Fig. 23 is a plan view of the latch pivot of Fig. 12.

Fig. 24 is a side view thereof.

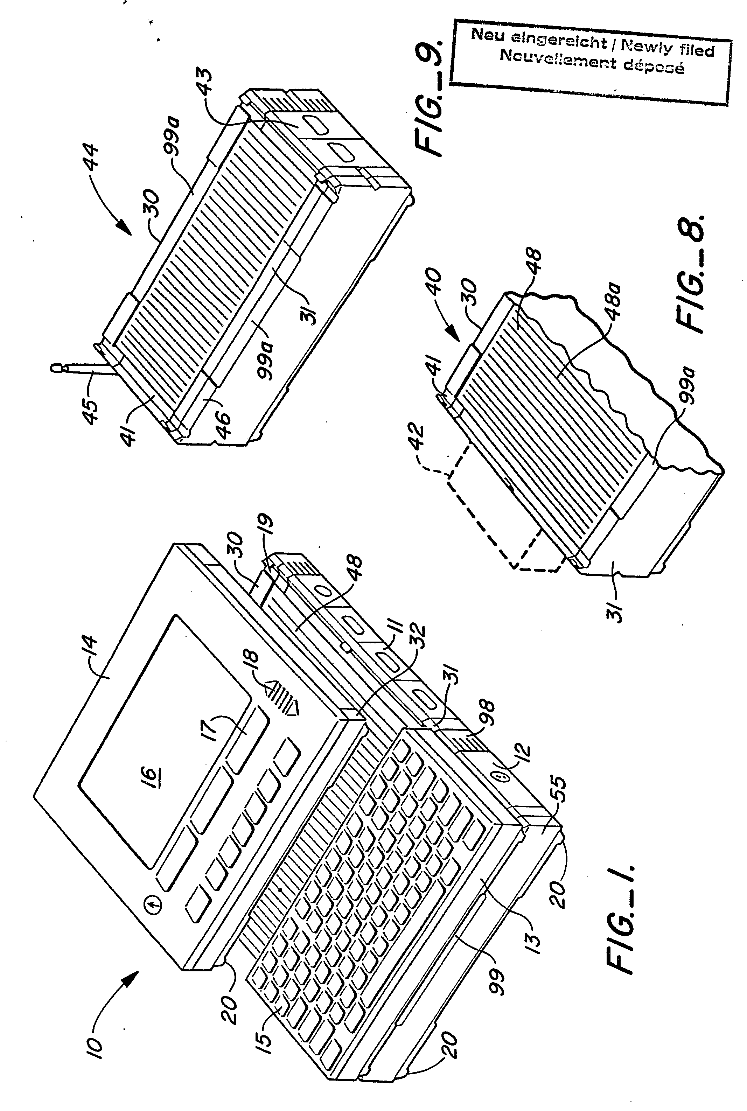

Fig. 1 illustrates the modular system 10 of the invention in which a series of rectangular slices or block-like casings 11, 12, 13 and 14 are assembled into a rectangular stack of such casings. For example, slice 11 may be a mass storage device, slice 12 may be a power slice, slice 13 a demountable keyboard having keys 15, and slice 14 may be a demountable slice having a visual display 16, function keys 17, and a contrast control 18. The slices are interconnected by providing tongue and groove-containing edge connection strips 30, 31 and 32. Such tongue and groove structures 19 are provided at the ends of each strip. While only four slices are illustrated, the system is designed so that any number of slices may be assembled bottom-to-top and front-to-back so that six, seven or even eight or more slices can be formed to form an integrated computer system with various capabilities.

It is clearly seen that this system allows a user to build a custom computer out of a number of standard components in each of the particular rectangular slices. Slices may include both standard hardware and specialized hardware as well as various software interfaces such as PC compatibility, Ethernet®, EGA, DOS, UNIX®, and OS2. Standard interfaces may be supplied in a particular slice which supports special capabilities such as positioning, data acquisition, land mobile and cellular radio, security and fiber optic media. The modular assemblage of components in the individual slices allows instant upgrade to the latest processor, latest video and the latest storage technologies, one slice at a time. The assemblage has an extremely small form factor. Various slices or combinations of slices can be easily unlatched so that those slices forming particular functions which are needed off-site can be hand-carried to the site. A communications link may be included in one carried slice to convey data to the slices remaining in a stack. The system permits local and wide area networking over radio or wire, affords high resolution graphics and brings industry standard network technology to a hand-held scale. This system also accommodates multiple battery packs in the form of slices which are latched onto other slices for extended periods of tetherless use. Thus not only are the slices forming the basic stack latched together but removed slices can be latched together to form a portable stack of slices.

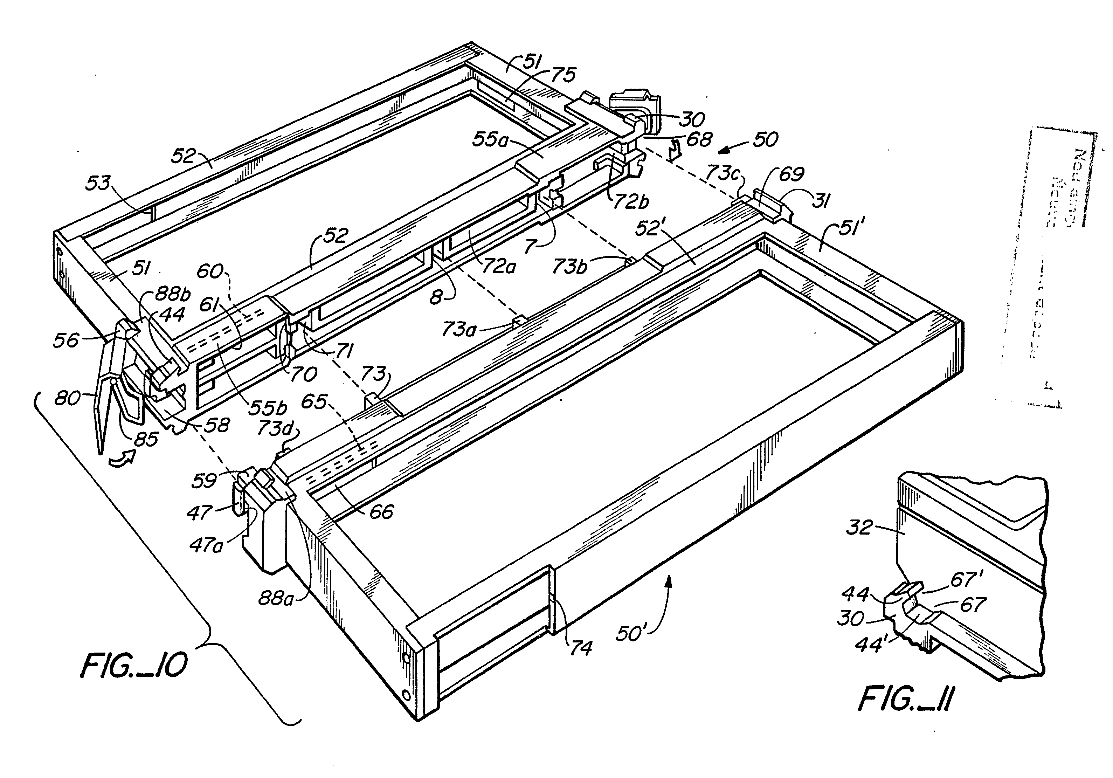

Typically, the console slice 14 provides 640 x 400-bit map resolution, EGA compatibility, touch screen, power controls, customized function keys and an interface to an external wireless keypad, in a design that supports one-hand operation in a wide range of positions and lighting conditions. Mass storage slice 11 provides mass storage such as floppy, hard disk or CD-ROM. Communications slices as shown in Fig. 9 with other external modules can access land mobile cellular and local area radio networks. Battery and power converters slices such as slice 12 may contain a full range of self-contained power sources allowing for automotive (12V), military (28V) and worldwide AC utilization. Other accessory slices may be attached to the stack of slices including adaptors for connecting systems to traditional Ethernet® and XT or AT keyboards as well as to kits (not shown) to facilitate hand-carrying of the system or mounting the system to vehicles or other holding structures. Software usable with the system provides standards such as DOS 3.3, Windows, NetBIOS and UNIX with enhancements for mobile use. Rectangular cross-sectioned parallel ribs 48a on cover 48 provide strengthening of the cover to prevent inward deformation and provide increased surface area for heat dissipation. Cooling channels 99 are formed between stacked slices. These channels extend between, for example, the top cover of slice 12 and the bottom cover of slice 13 (as well as between other stacked slices), and depressed areas 99a in medial portions of strips 30, 31 and 32 as shown more clearly in Figs. 8 and 9.

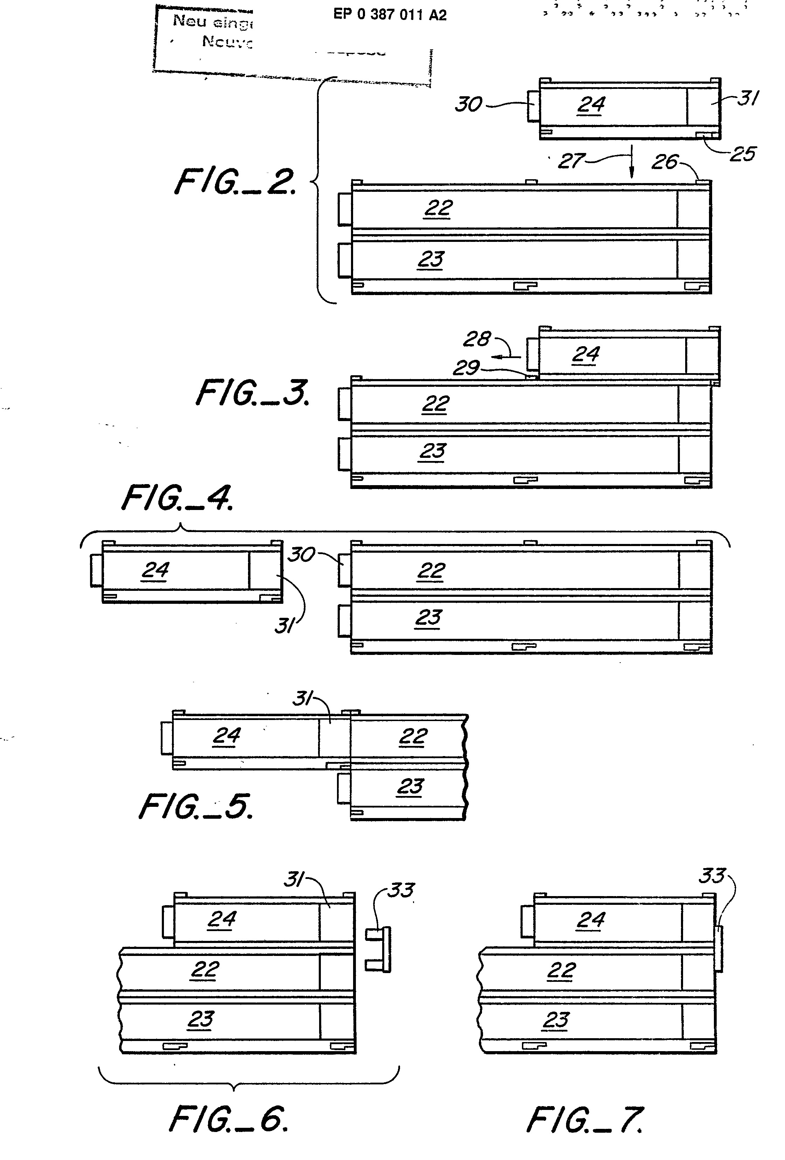

Fig. 2 illustrates schematically the first step in the bottom-to-top mounting of a slice 24 onto a vertical stack of other slices 22, 23. Interconnection means 25, 26 in the form of edge connection strips including tongues and grooves on end surfaces thereof or other interconnect means, are initially aligned and the slice 24 lowered in a direction indicated by arrow 27 so that the tongues and grooves are in the same plane. As shown in Fig. 3, the slice 24 after initially mating with the appropriate groove and tongues is moved in the direction of arrow 28 so that the respective tongues and grooves of slice 24 and slice 22 including tongue 29 slide and lock together.

Fig. 4 illustrates a mating of a slice 24 to a stack of slices 22 and 23 in a front-to-back mounting. Edge connection strips 30 and 31 are placed in aligned orientation on the same longitudinal axis. Slice 24, more particularly its fixed tongue and groove-containing end strip, is then moved into sliding relationship with complementary interconnection means on slice 22 as shown in Fig. 5 and subsequently locked in place. As shown in Fig. 10, the edge connection strips may mount socket-containing printed circuit boards and a pin connector(s) placed in an aperture(s) in the edge connection strips so as to make an electrical connection between the respective circuit boards of the abutting edge connection strips. Alternatively, a U-shaped connector block 33 may be employed to make an edge-to-edge connection on slices which are stacked vertically as shown in Figs. 6 and 7. ·

Fig. 8 illustrates a typical exterior view of a portion of a processor slice in which a pair of edge connection strips 30 and 31 form two side edges of the slice 40. Enclosure panels 48 screw connected to an internal frame of the slice are provided on the top and bottom and those sides 43 (Fig. 9) of the slice orthogonal to the edge connection strips to form a sealed housing for the electronic components and modules within the interior of the slice. A storage sub-system 42 shown in dashed lines is pluggable into the side edges 43 of the slice to provide removable mass storage. The top exterior wall 48 preferably contains a groove 41 to facilitate the sliding action of the various tongue and grooves making up the locking interconnection between the slices. As seen in Fig. 9, an appropriate communications aerial 45 is connected to a side edge 43 of a communications slice 44. A dress cover strip 46 may be attached to the exterior of edge connection strip 31 for the purpose of protecting and sealing the exposed connectors.

Fig. 10 illustrates the front-to-back interconnection of frame assemblies 50 and 50′ by the edge connection strips 30 and 31. These strips are attached to side edges 52 of a rectangular frame comprising side support edges 51 and side edges 52. The frame members are of E or other cross section and may include a central shelf 75 extending inwardly from the overall inwardly-facing channel of the side pieces. The electronic modules including printed circuit boards (not shown) are mounted across shelves 75 internally of the rectangular frames 50, 50′. The design of the internal electronic modules does not form a part of the present invention. These functions are fully set forth in the related application. The frame member is typically made of extruded and milled aluminum channel stock while the edge connection strips are a thermoplastic material such as Makroblend UT-1018 available from the Mobay Corporation. The molded strips have a texture in accord with specification SPI-4. The plastic strips many be custom colored so that the strips, side plates and top and bottom enclosure panels attached to the frames sides 51 and 52 are of matching or dissimilar colors.

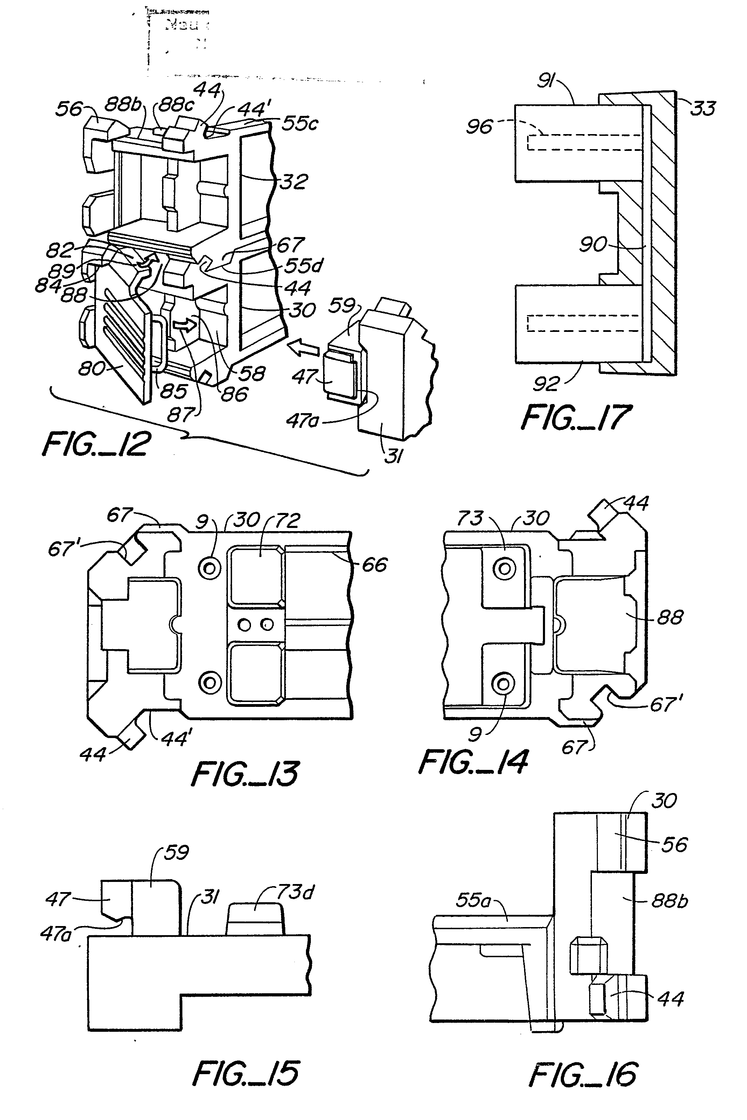

Various cut-outs 53, 66 and 74 are provided in the exterior wall of the frame pieces 52, 52′ to allow for mounting of printed circuit boards 60, 65 therein. Upon assembly front-to-back of frame 50 and frame 50′ sockets within the circuit boards 60 and 65 are aligned with each other and a suitable electrical connector, such as an 8800 Series 50 mil pitch two-piece connector manufactured by KEL Corporation, Tokyo, Japan, utilized to connect the respective sockets of the facing circuit boards. Molded walls 7, 8 are formed in the edge connection strips so as to form a series of spaced recesses or slots 72, 72a, 72b within the strip. Guide recesses or slots are thus formed between adjacent walls. Interlocking posts 70 are provided on the strip surface facing the exterior so as to aid in guiding the strips into abutting relationship. As can be seen, the strip 30 is primarily a receptacle for the outwardly extending posts or tabs 73, 73c and 73d and vertical walls 73a, 73b on the edge connection strip 31. Dash lines indicate the direction and the assemblage of the posts and walls of strip 31 into the recesses formed between the interior walls and under the recesses 72 in strip 30. Tongues 59,69 and grooves or recesses 58 and 68 are formed on outer edge portions 55a, 55b of the connector strips for both guiding and locking of the edge strips together. Latches 80 (one being shown) are pivotally connected to the outer edges of the edge connection strips and include at the pivoted joint a pivotable wire bail 85 movable (arrow 87 in Fig. 12) to lockingly abut an undercut 47a on a post 47 extending laterally from tongue 59 when tongue 59 (and tongue 69) are positioned in the outer edge recesses 58, 68 of connection strip 30. A curved end of the bail latched in the undercut 47a creates sufficient retention force to prevent backing out of strips 30, 31 or wobbling of the abutting and interfitting connection strips 30, 31. The bail is protected from inadvertent disassembly by a latch plate 80 which is pivotable over the bail 85. The latch plate 80 includes an upper lip 82 which as described in Fig. 12 acts also to latch a frame and connection strip 32 bottom-to-top to edge connection strip 30. Both the bail and the latch plate are pivotally connected to a latch hinge 84 as seen in Fig. 12.

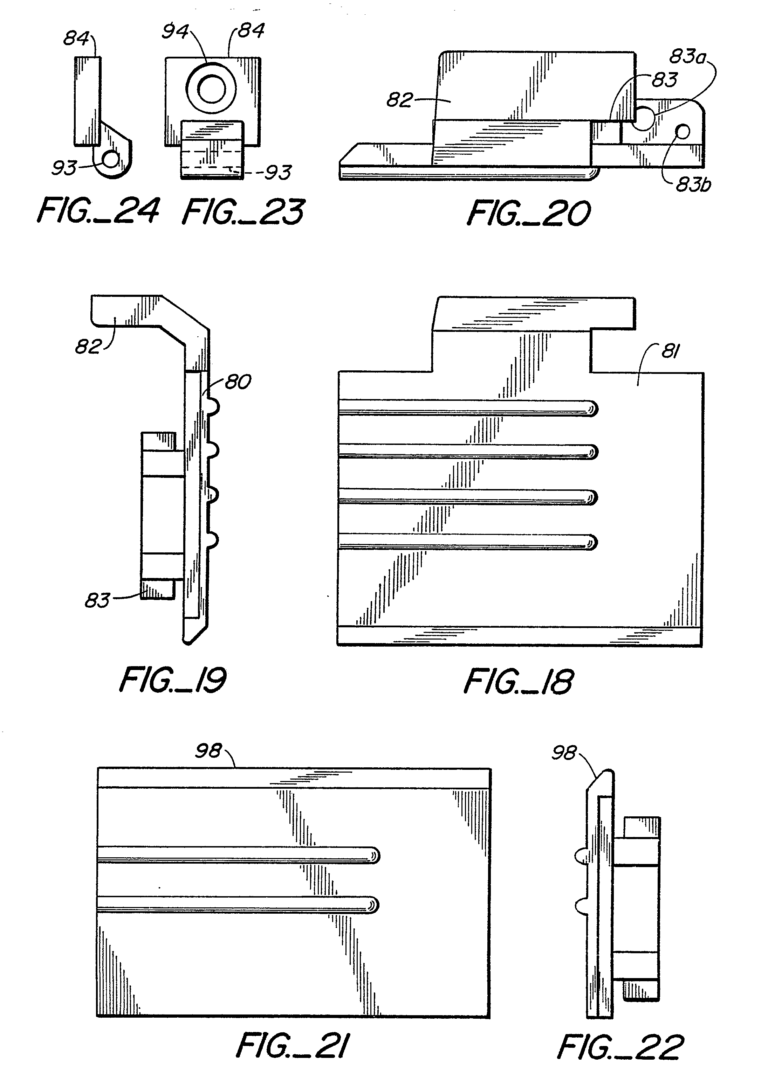

Fig. 11 illustrates a locking and sliding action of an edge connection strip 32 on the top of edge connection strip 30. The former contains at each end a tongue 67 and groove 67′ while the latter at each end contains a groove 44′ and a tongue 44 which interfit together in sliding relationship. As seen in Fig. 12, when the sliding motion of strips 32 and 30 are completed so that the outer side edges 55c, 55d of the strips are in the same plane, the latch plate 80 is pivoted as indicated by arrow 89 so that its bent top 82 extends into a recess 88 formed between the outer edges of the strips, particularly a recess formed by a space 88a forward of and aligned behind tongue 67 and a space 88b in front of guide tongue 56. This prevents pull-out of tongue 67 and tongue 44 from grooves 44′ and 67′, respectively, and thus firmly locks, with the assistance of hook-like tongue 44, strips 32 and 30 (and their attached frames and component slices) together. A stop tab 88c at an inner edge of recess 88b is provided to prevent oversliding of the slices one with another. A pivot pin 83 extends between hinge segments on the inner surface 81 of the latch plate 80 and latch hinge 84. The bail 85 includes bent ends which pivot in apertures 83b of latch hinge 83 (Fig. 20). The bail is guided so that it extends around a post 47 extending outwardly from the rear of recess 58, where the bail captures undercut 47a of post 47 of a front-to-back mounted frame 31 as seen in Fig. 10.

Figs. 13-16 detail the particular end configurations of the two connection strips 30 and 31. It is seen in Fig. 12 that strips 30 and 32 are duplicates of each other since they are on the same oriented edge of their respective frames and slices, i.e. common strips, e.g., 30 and 32, are stacked top-to-bottom while differently shaped edge connection strips, e.g., 30 and 31, are abutted front-to-back.

As seen in Figs. 13 and 14 apertures 9 are provided for reception of fasteners 9 to connect the strip to a frame side 52 or 52´. Fig. 15 clearly shows post 47 of strip 31 with undercut 47a for reception of the bail mid-section. Tongue 59 is receivable in recess 58 of strip 30 (Fig. 10) while post 73d in strip 31 is guided into recess 72 of strip 30. Fig. 16 more clearly shows the space 88b between locking tongue 44 and guide tongue 56 into which space the bent top 82 of latch plate 80 is pivoted to lock top-to-bottom abutted slices together.

Fig. 17 illustrates the in-block electrical connection 33 which contains a printed circuit board 90 providing an interconnection between parallel rows of conductor strips 96 mounted in apertures in legs 91 and 92 of the block. The block is molded of Kraton thermoplastic rubber manufactured by Shell Chemical Co. Legs 91 and 92 plug into mating receptacles mounted on circuit board 60 between vertically co-located slices, as illustrated in Fig. 6 and Fig. 7. Coplanar and complementary connection strips (not shown) such as the aforementioned 8800 Series connectors of KEL Corporation extend from the circuit board in a slice and interconnect with complementary conductor strips 96 in the U-block legs.

Figs. 18-20 show in detail the latch plate 80, locking tab 82 and the pivot hinge 83a as well as an aperture 83b for reception of the ends of bail 85. Figs. 21 and 22 show a pivotable keyboard latch 98 for locking the keyboard to slice 12 as seen in Fig. 1.

Figs. 23 and 24 have been described above. In addition an aperture 94 is provided for insertion of a fastener to hold the latch hinge 84 in a strip 30 or 32, one hinge at each strip end.

The above description of embodiments of this invention is intended to be illustrative and not limiting. Other embodiments of this invention will be obvious to those skilled in the art in view of the above disclosure.

## Claims

1. A system comprising a series of electronic assemblies or units (11,12,13,14;22,23,24;40,44;50,50´) each of rectangular configuration, each unit having interconnect means for top-to-bottom and front-to-back abuttingly interconnecting with one or others of the units.

2. A system as claimed in claim 1 in which the units are stacked one on top of another and edge attached to form multiple stacks of assemblies.

3. A modular computer and interface system comprising:
a series of interconnectable slices or units (11,12,13,14;22,23,24;40,44;50,50´) each comprising a rectangular block casing containing a functional electronic module, wherein a first unit includes first interconnect means extending adjacent a bottom underside surface thereof for mechanically interconnecting with a second unit and a second interconnect means extending on at least a side edge thereof for mechanically interconnecting with a third unit;
wherein the second unit has a first connect means adjacent a top surface thereof for interlocking with the bottom surface of the first unit whereby the second unit abuts the underside of the first unit, the second unit including at least one connect edge extending adjacent a side thereof; and
wherein the third unit includes at least one connect edge for connection with the second unit connect edge or with the first unit side edge for abuttingly mechanically connecting the third unit to the second unit or the first unit.

4. A system as claimed in claim 1, 2 or 3 wherein the interconnect means comprises a pair of edge connection strips on the ends of a unit and wherein an edge connection strip of unit is matingly engageable with an edge connection strip of another unit.

5. A system as claimed in claim 4 wherein at least two units include a cover extending between the edge connection strips, the cover having a series of parallel cooling ribs extending therefrom, and wherein the edge connection strips include a depressed medial edge area, the area and the ribs forming a cooling passage between stacked units.

6. A system as claimed in any preceding claim wherein the interconnect means are slidably engageable.

7. A system as claimed in any preceding claim wherein the interconnect means comprises tongue and groove means for slidingly abutting the units together.

8. A system as claimed in claim 1, 2 or 3 wherein the interconnect means comprise edge connection strips each including at least one pair of edge grooves and at least one pair of edge tongues, the edge grooves of one strip receiving edge tongues of another abutting strip and edge tongues of that one strip being slidably insertable into the edge grooves of another strip.

9. A system as claimed in claim 6, 7 or 8 comprising a stop extending from a surface of the unit for limiting the length of sliding movement.

10. A system as claimed in any preceding claim comprising means for latching the units together to prevent accidental disassembly thereof.

11. A system as claimed in claim 4, 5 or 8 comprising a pivoted latch connected to an edge of the edge connection strips, the latch being operable to latch both abutting front-to-back units and abutting top-to-bottom units.

12. A system as claimed in claim 7 or 8 comprising latch means for retaining the tongues in the grooves and for preventing accidental separation of abutted units, and bail means on the latch means for lockingly abutting undercuts in the tongues.

13. A system as claimed in claim 7 or 8 comprising a recess formed between abutting top-to-bottom surfaces of abutting edges of first and second units and extending between the tongues, the latch means including a latch plate pivotable into the recess to lock the first and second units together.

14. A system as claimed in any preceding claim comprising electrical connect means extending between the units for electrically interconnecting the units.

15. A system as claimed in claim 14 wherein the electrical connect means are included in the interconnect means.

16. A system as claimed in claim 14 wherein the electrical connect means are included in the interconnect means for simultaneously electrically connecting units together when the units are being interconnected.

17. A system as claimed in claim 14 wherein the electrical connect means comprise a U-block including an electrical conductive path extending between the edges of stacked units for electrically connecting electrical components between the stacked units.

18. A system as claimed in claim 14 wherein units having abutting edges include a printed circuit board extending parallel to each abutting edge of and wherein the electrical connect means comprise pin connection which upon interlocking assembly electrically connect the units.

19. A system as claimed in any preceding claim wherein one of the units comprises a console having a display screen and another of the units includes a keyboard for inputting data to the console assembly.

20. A system as, claimed in claim 19 wherein the console unit is an upper unit having the display screen extending on a top surface thereof, and wherein the keyboard unit is a side-connected unit.

21. A system as claimed in claim 20 wherein the console unit includes a touch display screen, power controls and function keys, an underlying unit includes mass data storage, and the keyboard unit includes a demountable operations keyboard and means for wireless communicating to the underlying unit when demounted from the console and keyboard units.

22. A system as claimed in any preceding claim comprising additional units interconnectable to form various stacked slices of units.

23. A system as claimed in claim 22 wherein the additional units contain mass storage, land mobile and cellular communications, power converters, power sources and data print-out modules.

FIG._1.

FIG._9.

FIG._8.

EP 0 387 011 A2

EP 0 387 011 A2

FIG._2.

30 — 24 — 31

25

27 — 26

22

23

FIG._3.

28
29

24

22

23

FIG._4.

24 — 30 — 22

31 — 23

FIG._5.

31

24 — 22

23

FIG._6.

31 — 33

24

22

23

FIG._7.

33

24

22

23

FIG._10

FIG._11

*FIG._12*

*FIG._17*

*FIG._13*

*FIG._14*

*FIG._15*

*FIG._16*

*FIG._24*  *FIG._23*  *FIG._20*

*FIG._19*  *FIG._18*

*FIG._21*  *FIG._22*